# EUROPEAN PATENT SPECIFICATION

(11) **EP 4 494 537 B1**
(45) Date of publication and mention of the grant of the patent: **08.04.2026**
(21) Application number: 24185343.1
(22) Date of filing: 28.06.2024
(51) Int. Cl.: A47L 7/00, A47L 9/00, A47L 9/26, A47L 11/34, A47L 11/40

(54) **VENTILATION ARRANGEMENT FOR A CLEANING APPARATUS**
BELÜFTUNGSANORDNUNG FÜR EIN REINIGUNGSGERÄT
DISPOSITIF DE VENTILATION POUR UN APPAREIL DE NETTOYAGE

(30) Priority: 18.07.2023 US 202363527363 P
(43) Date of publication of application: 22.01.2025
(73) Proprietor: BISSELL Inc., Grand Rapids, MI 49544-2516 (US)
(72) Inventor: SLOBODA, Mitch, Grand Rapids, 49544 (US); NGUYEN, Tom, Grand Rapids, 49544 (US)
(74) Representative: Sandersons

(56) References cited:
- CN-A- 109 512 328
- US-A1- 2013 318 741
- US-B1- 7 073 226
- US-S- D 979 163
- US-S- D 979 163

## Description

The present invention generally relates to a cleaning apparatus and, more particularly, to a ventilation arrangement for a cleaning apparatus.

### BACKGROUND OF THE INVENTION

Cleaning devices may be exposed to liquids and may generate heat. Additionally, cleaning devices may have one or more retainers for securing equipment, implements, or tools for use with the cleaning device. The document US 7 073 226 B1 describes a cleaning apparatus according to the preamble of independent claim 1.

### BRIEF SUMMARY

According to one aspect of the present invention, a cleaning apparatus includes a base and an outer housing with a sidewall that is operably coupled with the base. The sidewall defines an interior of the outer housing and has an outer surface. A recess is formed in the outer surface of the sidewall and is defined at least in part by a recess top wall, a recess bottom wall, and a recess rear wall that extends between the recess top wall and the recess bottom wall. A vent is disposed in the recess and defines at least one port in the recess rear wall that provides fluid communication to the interior. A holder is coupled with the sidewall and has a portion that is disposed opposite the recess rear wall such that the holder covers a front of the at least one port. The holder is configured to secure a component with the outer housing of the cleaning apparatus.

According to another aspect of the present invention, a ventilation arrangement for a cleaning apparatus includes a recess formed in an outer housing of the cleaning apparatus. The outer housing defines an interior. The recess is defined at least in part by a recess top wall, a recess bottom wall, and a recess rear wall that extends between the recess top wall and the recess bottom wall. A vent is disposed in the recess and defines at least one port in the recess rear wall to provide fluid communication to the interior. A holder is coupled with the outer housing and has a portion that is disposed opposite the recess rear wall such that the holder covers a front of the at least one port. The holder is configured to secure a component for the cleaning apparatus with the outer housing. An ingress is disposed below the recess and extends at an oblique angle into the recess.

According to another aspect of the present invention, a cleaning apparatus includes a base and an outer housing with a sidewall that is operably coupled with the base. The sidewall defines an interior of the outer housing and has an outer surface. A recess is formed in the outer surface of the sidewall and is defined at least in part by a recess top wall, a recess bottom wall, and a recess rear wall that extends between the recess top wall and the recess bottom wall. A vent is disposed in the recess and defines at least one port in the recess rear wall to provide fluid communication to the interior. A cord wrap is coupled with the sidewall and covers a front of the at least one port. The cord wrap is configured to secure a power cord for the cleaning apparatus with the outer housing.

According to another aspect of the present invention, a cleaning apparatus includes a base and an outer housing with a sidewall that is operably coupled with the base. The sidewall defines an interior of the outer housing and has an outer surface. A recess extends into the outer surface of the sidewall and is defined at least in part by a recess top wall, a recess bottom wall, and a recess rear wall that extends between the recess top wall and the recess bottom wall. A vent is disposed in the recess and defines at least one port in the recess rear wall to provide fluid communication to the interior. A cord wrap is coupled with the sidewall and has a portion that is disposed opposite the recess rear wall such that the cord wrap covers a front of the at least one port. The cord wrap includes a panel that overlays the vent. The cord wrap also includes a lower end that is spaced from the sidewall and disposed below the at least one port and an upper end that extends from the panel and engages the sidewall above the vend to limit liquid from entering the recess rom above the vent.

These and other features, advantages, and objects of the present invention will be further understood and appreciated by those skilled in the art by reference to the following specification, claims, and appended drawings.

### BRIEF DESCRIPTION OF THE DRAWINGS

In the drawings:
FIG. 1 is a side perspective view of a portable cleaning apparatus having an exemplary ventilation arrangement, according to one aspect of the present invention;
FIG. 2 is a side perspective view of the portable cleaning apparatus of FIG. 1 with a cable, a hose, and an accessory tool removed, according to one aspect of the present invention;
FIG. 3 is an exterior perspective view of an exemplary ventilation arrangement with a cord wrap removed;
FIG. 4 is an interior perspective cross-sectional view of an exemplary ventilation arrangement;
FIG. 5 is a side cross-sectional view of a holder and sidewall of the portable cleaning apparatus of FIG. 2, taken along the line V-V;
FIG. 6 is an exterior perspective view of a cross-section of a holder and a second exemplary ventilation arrangement, according to another aspect of the present invention; and
FIG. 7 is a cross-sectional view of the portable cleaning apparatus of FIG. 1, taken along the line VII-VII.

### DETAILED DESCRIPTION

The present illustrated embodiments reside primarily in combinations of method steps and apparatus components related to a ventilation arrangement for a cleaning apparatus. Accordingly, the apparatus components and method steps have been represented, where appropriate, by conventional symbols in the drawings, showing only those specific details that are pertinent to understanding the embodiments of the present invention so as not to obscure the disclosure with details that will be readily apparent to those of ordinary skill in the art having the benefit of the description herein. Further, like numerals in the description and drawings represent like elements.

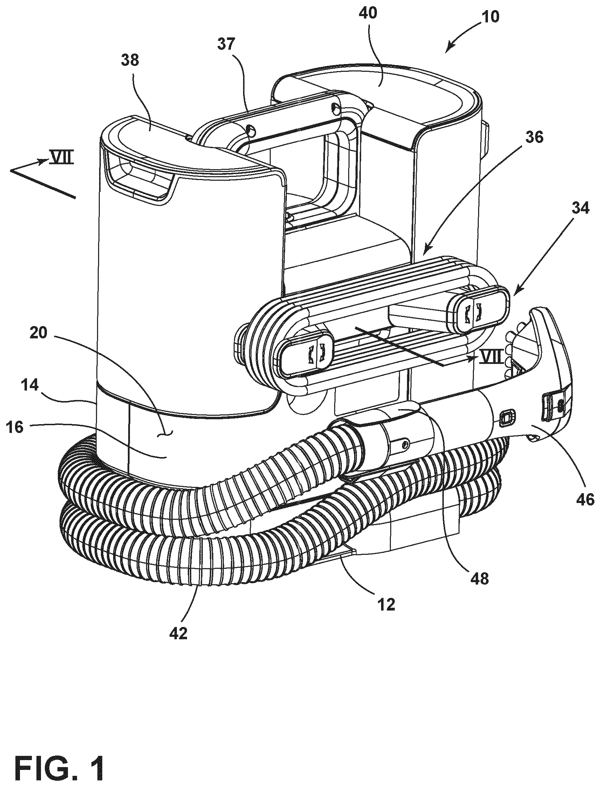

For purposes of description herein, the terms "upper," "lower," "right," "left," "rear," "front," "vertical," "horizontal," and derivatives thereof, shall relate to the invention as oriented in FIG. 1. Unless stated otherwise, the term "front" shall refer to a surface closest to an intended viewer, and the term "rear" shall refer to a surface furthest from the intended viewer. However, it is to be understood that the invention may assume various alternative orientations, except where expressly specified to the contrary. It is also to be understood that the specific structures and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

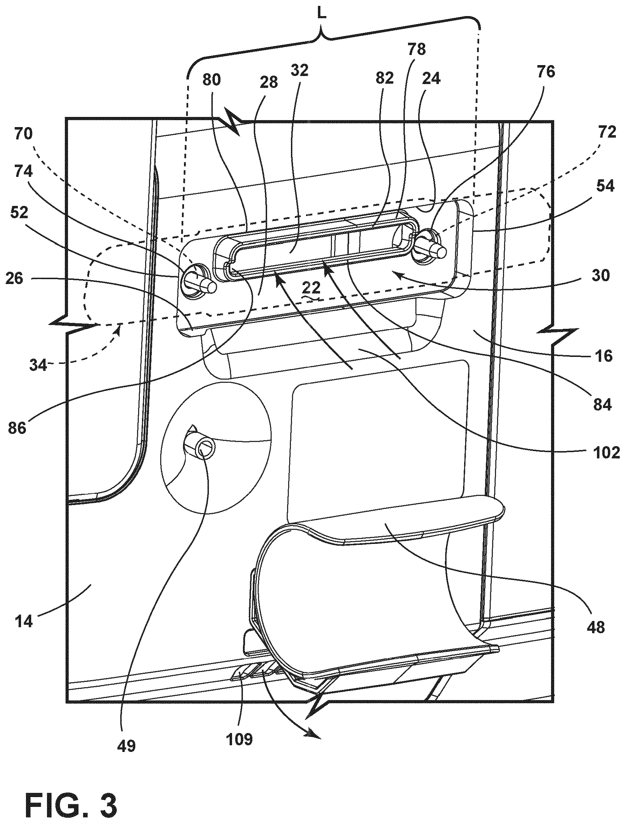

Referring to FIGS. 1-7, reference numeral 10 generally designates a cleaning apparatus that includes a base 12 and an outer housing 14. The outer housing 14 includes a sidewall 16 that is operably coupled with the base 12. The sidewall 16 defines an interior 18 of the outer housing 14 and has an outer surface 20. The cleaning apparatus 10 includes a recess 22 (FIG. 3) that is formed in the outer surface 20 of the sidewall 16. The recess 22 is defined at least in part by a recess top wall 24, a recess bottom wall 26, and a recess rear wall 28 that extends between the recess top wall 24 and the recess bottom wall 26. A vent 30 is disposed in the recess 22 and defines at least one port 32 in the recess rear wall 28 that provides fluid communication to the interior 18 of the outer housing 14. A holder 34 is coupled with the sidewall 16 opposite the recess rear wall 28 such that the holder 34 covers a front of the port 32. The holder 34 is configured to secure a component 36 with the outer housing 14 of the cleaning apparatus 10.

With reference to FIG. 1, the illustrated cleaning apparatus 10 is in the form of a portable deep cleaner (PDC) that has a handle 37, as well as a supply tank 38 and a recovery tank 40. Although a portable deep cleaner is illustrated, it will be understood that features set forth herein may also be applied to an upright deep cleaner (UDC) or other cleaning devices. The supply tank 38 supplies cleaning liquid for use by the cleaning apparatus 10 and the recovery tank 40 stores recovered cleaning liquid from a surface to be cleaned. Both the supply tank 38 and the recovery tank 40 are configured to be removable from the cleaning apparatus 10. The supply tank 38 may be removed so that the supply tank 38 can be refilled with cleaning fluid while the recovery tank 40 may be removed so that the recovery tank 40 can be emptied of recovered cleaning fluid and debris removed from the surface to be cleaned.

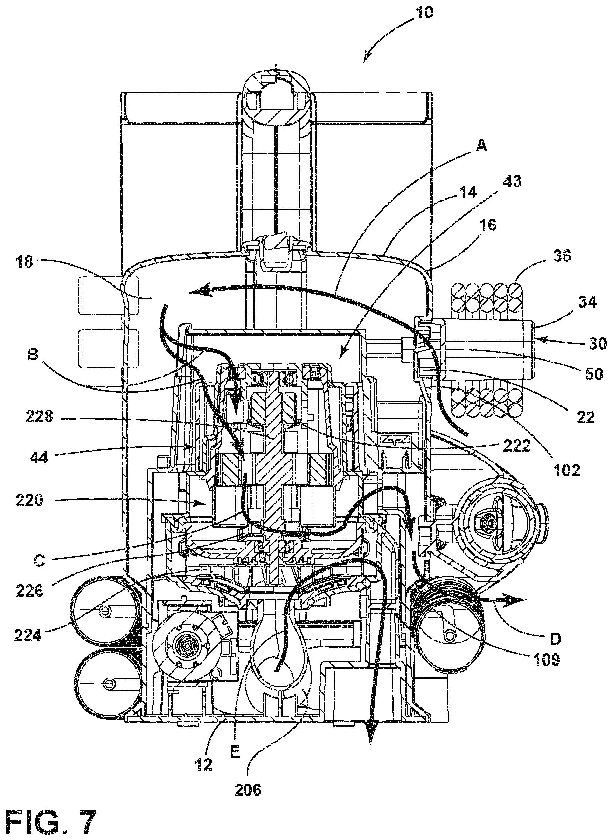

With reference again to FIG. 1, an accessory hose 42 is operably coupled with the cleaning apparatus 10 and is in fluid communication with a vacuum assembly 43 (FIG. 7) disposed inside the cleaning apparatus 10. The vacuum assembly 43 may include mechanical and electrical components 44 (FIG. 7), which may include a motorized fan unit that draws vacuum. The mechanical and electrical components 44 are configured to draw fluid, such as air and/or liquids from the surface to be cleaned into the recovery tank 40. The mechanical and electrical components 44 of the cleaning apparatus 10 are also configured to dispense the cleaning fluid from the supply tank 38. The cleaning fluid may be water, a cleaning solution, or a combination thereof. In addition, a heater may be used to warm the cleaning fluid prior to being dispensed onto the surface to be cleaned.

Still referring to FIG. 1, the accessory hose 42 may be wrapped around the cleaning apparatus 10 when not in use or in a stored position, or unwrapped when in use. The accessory hose 42 is configured to be coupled with an accessory tool 46 that is designed to distribute and remove the cleaning fluid from the surface to be cleaned. As illustrated in FIG. 1, a clip 48 is configured to connect both the accessory hose 42 and the accessory tool 46 to the cleaning apparatus 10. The accessory tool 46 may include any one of several cleaning features, including a brush, roller, suction nozzle, extraction tool, as well as any other various cleaning devices configured to dispense cleaning fluid and extract cleaning fluid. It is also contemplated that an agitator may be provided to agitate a surface to be cleaned. The agitator may include polymeric bristles, strips, tops, brushes, needles, or other various projections to help agitate the surface to be cleaned. In addition, a rubber squeegee or other liquid-moving device may also be provided on the accessory tool 46. Devices such as those listed above are helpful in removing pet hair, and other debris from upholstery, carpet, and any other surface, hard or soft, to be cleaned.

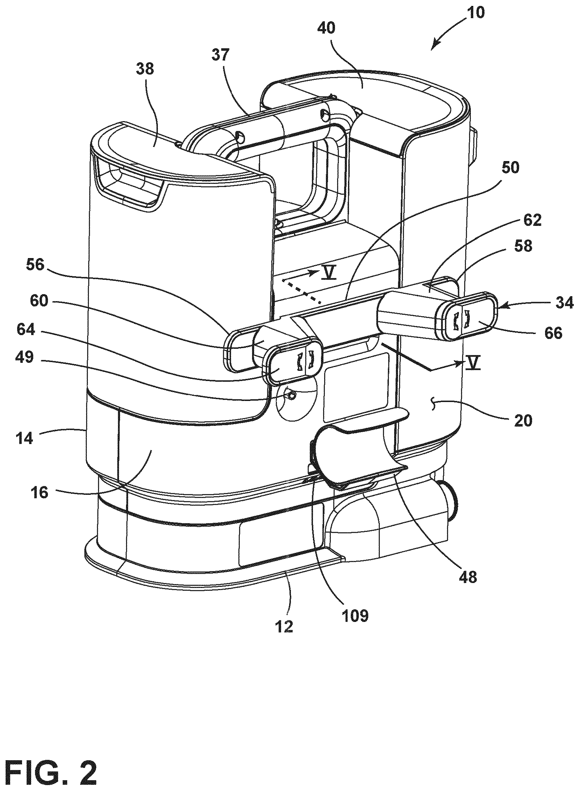

As shown in FIGS. 1 and 2, the cleaning apparatus 10 supports the component 36. In the illustrated construction, the component 36 is in the form of a power cord 36 that is operably coupled with the cleaning apparatus 10 to supply electrical power to the cleaning apparatus 10 from a remote power source, such as a wall outlet. The holder 34, which is illustrated as a cord wrap 34 in FIGS. 1 and 2, is operably coupled to the sidewall 16 and configured to support the power cord 36. The power cord 36 extends through an aperture 49 that is disposed on the outer housing 14 of the cleaning apparatus 10. The vent 30 is disposed behind the holder 34 proximate the recess 22 for drawing air inside the cleaning apparatus 10 to cool the mechanical and electrical components 44 inside the cleaning apparatus 10. With the holder 34 configured in a position that overlays the recess 22, the likelihood that external liquids may enter the vent 30 are minimized or eliminated. While the mechanical and electrical components 44 within the cleaning apparatus 10 should be supplied with consistent air movement, liquids that may come into contact with internal mechanical or electrical components of the cleaning apparatus 10 is not desirable.

As noted above, and for purposes of this invention, it will be understood that the holder 34 is in the form of a cord wrap and the component 36 is in the form of a power cord. However, it will be understood that the holder 34 may take the form of various other structures generally configured to conceal the vent 30 on the cleaning apparatus 10. Similarly, the component 36 may also include alternate configurations. For example, the venting arrangement, including the vent 30, set forth herein could be disposed behind the clip 48 that is configured to support the accessory hose 42 and the accessory tool 46 on the sidewall 16 of the cleaning apparatus 10. It is contemplated that the holder 34 may include any mount, projection, notch, or structural feature that is configured to couple the component 36 with the outer housing 14 of the cleaning apparatus 10, while still at least partially concealing the vent 30. In addition, while the holder 34 is illustrated as being an essential portion of the outer housing 14, it will be understood that the recess 22 may be located elsewhere on the outer housing 14. Generally, the holder 34 and the recess 22 may be located anywhere on the outer housing 14 that allows the component 36 to be secured with the outer housing 14 while also allowing for proper ventilation of the cleaning apparatus 10. By arranging the ventilation for the cleaning apparatus 10 behind the cord wrap 34, more space may be available elsewhere along the side wall 16 of the outer housing 14 for attachment of other various components. Consequently, enhanced spatial availability is provided while maintaining ventilation for the cleaning apparatus 10.

Referring now to FIGS. 2-4, the cord wrap 34 includes a panel 50 that has a generally elongate shape that spans across the recess 22. The panel 50 is configured to be as long as, or longer than, a length L of the recess 22 between a first lateral end 52 of the recess 22 and a second lateral end 54 of the recess 22 and also cover an entirety of or a portion of the port 32. The panel 50 includes a first flange 56 that extends proximate the supply tank 38 and a second flange 58 that extends proximate the recovery tank 40. The panel 50 is secured to the outer housing 14 and is adjacent to the outer housing 14, the supply tank 38, and the recovery tank 40. It is also contemplated that the sidewall 16 of the cleaning apparatus 10 may be flush with or may not be flush with the supply tank 38 and the recovery tank 40. Thus, the panel 50 may be recessed into a portion of the sidewall, the first flange 56 may be recessed into a portion of the supply tank 38, and the second flange 58 may be recessed into a portion of the recovery tank 40. The cord wrap 34 also includes first and second projections 60, 62 that extend away from the panel 50 and first and second tabs 64, 66 disposed at a distal end of each of the first and second projections 60, 62, respectively. The first and second tabs 64, 66 are configured to maintain the power cord 36 in a wrapped configuration about the first and second projections 60, 62 of the cord wrap 34. It is contemplated that the first and second tabs 64, 66 may be rotatable to facilitate easy unwinding of the power cord 36 from the first and second projections 60, 62 of the cord wrap 34. The cord wrap 34 is positioned on the outer housing 14 such that the cord wrap 34 overlays the vent 30 which allows the cord wrap 34 to act as a splash guard to minimize or prevent liquids from entering the vent 30. Although liquids are largely limited from access to the interior 18 of the cleaning apparatus 10, the vent 30 is still capable of drawing air into the interior 18 below the cord wrap 34.

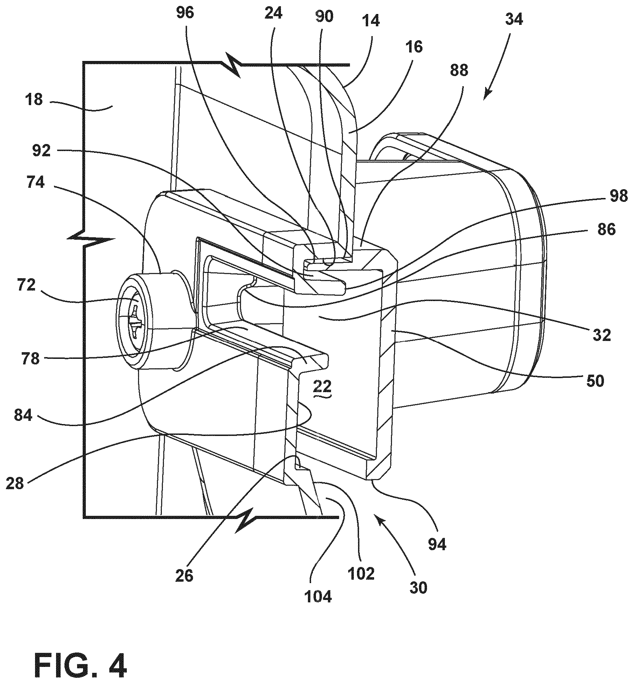

With reference now to FIG. 3, the illustrated construction shows the cord wrap 34 removed from the outer housing 14 to reveal the vent 30 of the cleaning apparatus 10. As illustrated, the port 32 is provided through the outer housing 14. The port 32 may be a single unitary port or may be split into a plurality of ports. The cord wrap 34 is attached to the outer housing 14 by first and second fasteners 70, 72 that connect the cord wrap 34 with the sidewall 16 of the outer housing 14. As shown in FIGS. 3 and 4, the first and second fasteners 70, 72 may be fastened within first and second threaded receptacles 74, 76, respectively, disposed inside the first and second projections 60, 62 of the cord wrap 34. Although shown as screw tape fasteners, the first and second fasteners 70, 72 may be in the form of bolts, rivets, adhesives, or any other coupling feature designed to maintain the cord wrap 34 in connection with the sidewall 16 of the outer housing 14.

With reference again to FIG. 3, the port 32 is defined by a peripheral flange 78 that extends about a periphery 80 of the port 32 and away from the sidewall 16. The peripheral flange 78 includes an upper wall 82 and an opposing lower wall 84. The peripheral flange 78 includes a notch 86 in the lower wall 84 that may act to enhance airflow between an external environment and the interior 18 of the cleaning apparatus 10. Consequently, the notch 86 results in the upper wall 82 extending further away from the sidewall 16 than the lower wall 84 extends from the sidewall 16.

As clearly illustrated in FIGS. 2 and 4, the cord wrap 34 covers the recess 22 to limit liquid from entering the recess 22 and to allow air to enter the recess 22. The cord wrap 34 engages the sidewall 16 above the recess 22 and on each side of the recess 22 while leaving a bottom of the recess 22 open. Additionally, the cord wrap 34 includes an upper engagement wall 88 that extends from the panel 50 and engages the sidewall 16. The upper engagement wall acts to block or otherwise shed liquids that could otherwise enter the port 32 from above. The panel 50 may be substantially planar and may extend generally parallel to the sidewall 16. The upper engagement wall 88 includes a cutout 90 configured for insertion into a receiving cavity 92 disposed above the recess 22. The cutout 90 defines a lip 96 that serves as an additional mechanism for guiding liquid away from entry into the vent 30. A lower engagement wall 94 of the cord wrap 34 extends away from the panel 50 toward the sidewall 16. The lower engagement wall 94 is spaced from the sidewall 16 and is disposed below the port 32.

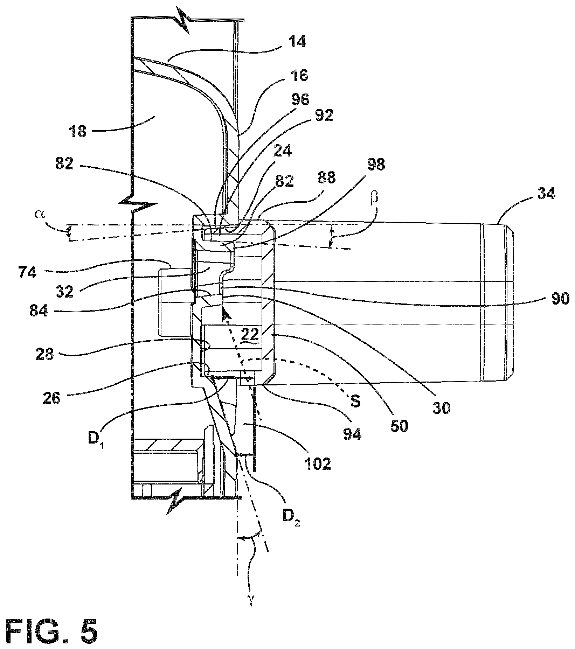

With reference now to FIG. 5, the lip 96 extends at a first oblique angle, α relative to the recess top wall 24 to guide liquid away from the port 32 via gravity. It is contemplated that the first oblique angle α is in the range of greater than 0° and less than 90°. However, in other instances, the first oblique angle α may be in the range of 1° to 10° and in other instances between 0° and 5°. In addition, geometric characteristics of the outer housing 14 may further or alternatively limit liquids from entering the vent 30 while allowing air to pass through the vent 30. Specifically, as illustrated in FIG. 5, upper wall 82 of the peripheral flange 78 extends at a second oblique angle β relative to the recess top wall 24 and moves liquid away from the interior 18 via gravity. It is generally contemplated that liquid that is introduced to this area will fall away from the lip 96 onto the recess top wall 24 and onto the upper wall 82 of the peripheral flange 78, which then guides the liquid away from the vent 30. The upper wall 82 includes an edge 98 that overhangs the front of the port 32. The second oblique angle β of the upper wall 82 is illustrated as a downwardly projecting angle, such that the upper wall 82 tapers from the recess rear wall 28 toward the lower wall 84. The second oblique angle β of the upper wall 82 is configured to guide liquid that enters the recess 22 away from the vent 30 to the edge 98 of the upper wall 82, which serves as a drip edge. This is because the upper wall 82 extends further from the recess rear wall 28 than the lower wall 84. Thus, liquid is limited from falling into the lower wall 84 and entering the interior 18 of the cleaning apparatus 10. The second oblique angle β may be in the range of greater than 0° to less than 90° in some instances, and in the range of 1° to 10° in other instances. In still other instances, the second oblique angle β is greater than 0° and less than 5°.

With reference now to FIGS. 4 and 5, the sidewall 16 also includes a canted ingress wall 102 that extends below the recess 22. A height of the canted ingress wall 102 provides for enhanced airflow into the vent 30. It is generally contemplated that the height of the canted ingress wall 102 may be between 10% and 50% of a vertical height of the recess 22. An oblique angle γ is defined by the inclined angle of the canted ingress wall 102 relative to the sidewall 16. A lateral gap 104 is formed between the panel 50 and the sidewall 16 that is greater at a top of the canted ingress wall 102 than at a bottom of the canted ingress wall 102. Specifically, a first distance D₁ formed at the top of the canted ingress wall 102 may be greater than a second distance D₂ formed by the lateral gap 104 at the bottom of the canted ingress wall 102. The third oblique angle γ may be in a range of more than 0° to less than 90° in some instances, between 1° and 10° in other instances, and between 0° and 5° in still other instances. The first distance D₁ is controlled such that the lower engagement wall 94 of the cord wrap 34 does not allow a direct line of sight through the port 32. This configuration prevents splashes from liquids, such as water, cleaning liquids, or other fluids, from directly entering the interior 18 of the cleaning apparatus 10 and from coming into contact with the internal mechanical and electrical components 44 of the cleaning apparatus 10. The recess bottom wall 26 may also be configured such that a direct line of sight is prevented through the port 32. Consequently, as illustrated by arrow S in FIG. 5, the splashing of any fluid or liquid does not have a direct path to the internals of the device.

Generally, by widening the space between the cord wrap 34 and the outer housing 14 below the recess 22 an increased volumetric flow rate of external cooling air is provided so the air entering the vent 30 may be maximized. Increased airflow allows for enhanced cooling of the mechanical and electrical components 44, such as the vacuum assembly 43 disposed within the cleaning apparatus 10. Accordingly, the combination of the canted ingress wall 102, and the overlapping of the cord wrap 34 increases air flow into the cleaning apparatus 10 while preventing or minimizing liquid infiltration into the interior 18 of the cleaning apparatus 10.

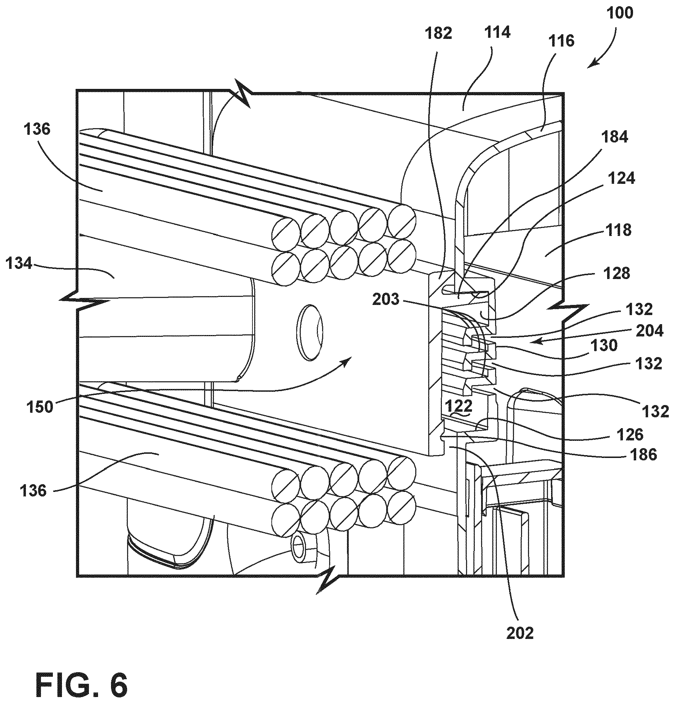

With Reference now to FIG. 6, another ventilation arrangement is provided that includes several similar aspects to those outlined above with respect to the ventilation arrangement set forth in FIGS. 1-5. It will be understood that unless otherwise identified, aspects for this construction will be similar or identical to those outlined above. A cleaning apparatus 100, as set forth in FIG. 6, includes a holder 134 that supports a component 136. The holder 134 includes a panel 150 that conceals a vent 130 that provides for cooling mechanical and electrical components within the cleaning apparatus 100. The vent 130 is generally disposed between an upper vent wall 124 and a lower vent wall 126. A rear vent wall 128 extends between the upper vent wall 124 and the lower vent wall 126. The panel 150 includes an upper wall 182, an intermediate wall 184, and a lower notch 186 that extend inwardly away from the panel 150 and toward a recess 122 defined by a sidewall 116 of an outer housing 114. The upper wall 182 is in abutting contact with the sidewall 116, while the intermediate wall 184 extends into the recess 122. An ingress wall 202 is defined proximate the lower notch 186. An air guide assembly 204 is disposed inside the recess 122 and includes multiple guides 203 that project from the rear vent wall 128 and that form an L-shape and direct air from the ingress wall 202 into an interior 118 of the cleaning apparatus 100. The guides 203 are disposed between adjacent ports 132. The downward directed orientation of the guides 203 directs fluid and particularly liquids downward, away from the vent 130, while still allowing air that is external to the vent 130 to pass into the interior 118 of the cleaning apparatus 100. As illustrated, the guides 203 project laterally and extend in a downward direction toward a distal end 205. This configuration helps to shield the inner components from liquids that could pass between the sidewall 116 and the upper wall 182 and/or between the sidewall 116 and the intermediate wall 184.

Notably, in the configuration illustrated in FIG. 6, the sidewall 116 does not taper and therefore, the ingress wall 202 is substantially parallel with the panel 150, which results in a substantially fixed width between the sidewall 116 and the panel 150. The ingress wall 202 of this construction is configured to limit liquid entry into the recess 122 from below the vent 130 without substantially lessening airflow into the vent 130. While the ingress wall 202 has a substantially fixed width relative to the sidewall 116, it is contemplated that the ingress wall 202 may taper in a similar fashion to that of the canted ingress wall 102 of the ventilation arrangement of FIGS. 1-5.

Referring now to FIG. 7, the illustrated ventilation arrangement is provided to demonstrate air circulation paths through the interior 18 when the mechanical and electrical components 44 are energized. The air flow paths include a cooling path that follows arrows A-D and a suction path that follows arrow E. The cooling path A-D provides air drawn into the interior 18 to pass over the mechanical and electrical components 44 to cool these components, and the suction path E creates a suction force at the accessory tool 46. The mechanical and electrical components 44 may include a motorized fan assembly 220 with a suction motor 222, an impeller assembly 224 operably coupled with the suction motor 222, and a cooling fan 226 operably coupled with the suction motor 222. The suction motor 222 connects with the cooling fan 226 and the impeller assembly 224 via a central shaft 228. Air from the external environment is drawn along the cooling path A-D, past the mechanical and electrical components 44, and out through the outlet 109 on the outer housing 14. For example, when the suction motor 222 rotates the cooling fan 226, the cooling fan 226 draws air through the port 32 to cool the suction motor 222.

With reference to FIGS. 2, 3, and 7, the vent 30 or 130 is configured to allow air to be drawn into the cleaning apparatus 10, which is ultimately exhausted at an outlet 109. As disclosed in further detail herein, air enters the machine compartment of the cleaning apparatus 10 and is warmed by the mechanical and electrical components 44 within the cleaning apparatus 10 and ultimately discharged at the outlet 109. Specifically, air is drawn into air pathway A over the internal mechanical and electrical components 44 of the cleaning apparatus 10. The air is drawn into contact with the mechanical and electrical components 44 at air pathway B before transitioning across the mechanical and electrical components 44 at air pathway C and exhausted through the outlet 109 at air pathway D. Notably, air is also drawn into an air intake duct 206 along pathway E up through a lower portion of the cleaning apparatus 10 and expelled through a bottom of the cleaning apparatus 10. Consistent air movement through the device results in cooling of the interior 18 of the cleaning apparatus 10, which results in better performance of the cleaning apparatus 10 and minimizes potential damage to the cleaning apparatus 10.

The device disclosed herein is further summarized in the following paragraphs and is further characterized by combinations of any and all various aspects described herein.

According to one aspect of the present invention, a cleaning apparatus includes a base and an outer housing with a sidewall that is operably coupled with the base. The sidewall defines an interior of the outer housing and has an outer surface. A recess is formed in the outer surface of the sidewall and is defined at least in part by a recess top wall, a recess bottom wall, and a recess rear wall that extends between the recess top wall and the recess bottom wall. A vent is disposed in the recess and defines at least one port in the recess rear wall that provides fluid communication to the interior. A holder is coupled with the sidewall and has a portion that is disposed opposite the recess rear wall such that the holder covers a front of the at least one port. The holder is configured to secure a component with the outer housing of the cleaning apparatus.

According to another aspect of the present invention, a holder is spaced from and covers an entirety of a front of at least one port.

According to another aspect of the present invention, a cleaning apparatus includes an ingress that is defined by an outer surface below a recess and extends at an oblique angle into the recess.

According to still another aspect of the present invention, at least one port is defined by a peripheral flange with an upper wall and an opposing lower wall that extends from a recess rear wall.

According to another aspect of the present invention, an upper wall extends further from a recess rear wall than a lower wall.

According to yet another aspect of the present invention, an upper wall extends at an oblique angle relative to a recess rear wall and includes an edge that overhangs the front of at least one port.

According to another aspect of the present invention, an upper wall tapers from an outer surface toward a lower wall.

According to another aspect of the present invention, a holder includes a panel that extends across a length of a recess from a first lateral end of the recess to a second lateral end of the recess to cover a front of at least one port.

According to another aspect of the present invention, a panel includes a lower end that is spaced from a sidewall. The lower end is disposed below at least one port.

According to another aspect of the present invention, a holder includes an upper end that extends from a panel and engages a sidewall above a vent to limit liquid from entering a recess from above the vent.

According to still another aspect of the present invention, at least one port is a single unitary port.

According to yet another aspect of the present invention, at least one port includes a plurality of ports, and further includes a guide that interposes a pair of the plurality of ports.

According to another aspect of the present invention, a guide extends substantially orthogonal relative to the recess rear wall.

According to another aspect of the present invention, a guide extends downward at a distal end of the guide.

According to still another aspect of the present invention, a guide forms an L-shape.

According to another aspect of the present invention, a ventilation arrangement for a cleaning apparatus includes a recess formed in an outer housing of the cleaning apparatus. The outer housing defines an interior. The recess is defined at least in part by a recess top wall, a recess bottom wall, and a recess rear wall that extends between the recess top wall and the recess bottom wall. A vent is disposed in the recess and defines at least one port in the recess rear wall to provide fluid communication to the interior. A holder is coupled with the outer housing and has a portion that is disposed opposite the recess rear wall such that the holder covers a front of the at least one port. The holder is configured to secure a component for the cleaning apparatus with the outer housing. An ingress is disposed below the recess and extends at an oblique angle into the recess.

According to another aspect of the present invention, a holder includes a panel that extends across a recess from a first lateral end of the recess to a second lateral end of the recess to cover a front of at least one port.

According to another aspect of the present invention, a panel includes a lower end spaced from an outer housing. The lower end is disposed below at least one port.

According to yet another aspect of the present invention, a holder includes an upper end that extends from a panel and engages an outer housing above a vent to limit liquid from entering a recess from above the vent.

According to another aspect of the present invention, cleaning apparatus includes a base and an outer housing with a sidewall that is operably coupled with the base. The sidewall defines an interior of the outer housing and has an outer surface. A recess is formed in the outer surface of the sidewall and is defined at least in part by a recess top wall, a recess bottom wall, and a recess rear wall that extends between the recess top wall and the recess bottom wall. A vent is disposed in the recess and defines at least one port in the recess rear wall to provide fluid communication to the interior. A cord wrap is coupled with the sidewall and covers a front of the at least one port. The cord wrap is configured to secure a power cord for the cleaning apparatus with the outer housing.

According to another aspect of the present invention, a cord wrap includes a panel that extends across a recess from a first lateral end of the recess to a second lateral end of the recess to cover a front of at least one port.

According to another aspect of the present invention, a cord wrap includes a first tab that is aligned with a first lateral end of a recess and a second tab that is aligned with a second lateral end of the recess.

According to still another aspect of the present invention, a cleaning apparatus includes an aperture that is formed in an outer surface. A power cord extends from the aperture and is configured to wrap around first and second tabs.

According to yet another aspect of the present invention, a cleaning apparatus includes a cooling fan disposed in an inner motor housing and is configured to draw air through at least one port and into an interior of a cleaning apparatus.

According to another aspect of the present invention, a suction motor is operably coupled with a cooling fan to drive the cooling fan to draw air through at least one port and into an interior of a cleaning apparatus to cool the suction motor.

According to still another aspect of the present invention, a cleaning apparatus includes at least one fastener disposed in a recess and configured to secure a cord wrap with an outer housing.

According to yet another aspect of the present invention, at least one fastener includes a first fastener disposed proximate to a first lateral end and a second fastener disposed proximate to a second lateral end.

According to another aspect of the present invention, cleaning apparatus includes a base and an outer housing with a sidewall that is operably coupled with the base. The sidewall defines an interior of the outer housing and has an outer surface. A recess extends into the outer surface of the sidewall and is defined at least in part by a recess top wall, a recess bottom wall, and a recess rear wall that extends between the recess top wall and the recess bottom wall. A vent is disposed in the recess and defines at least one port in the recess rear wall to provide fluid communication to the interior. A cord wrap is coupled with the sidewall and has a portion that is disposed opposite the recess rear wall such that the cord wrap covers a front of the at least one port. The cord wrap includes a panel that overlays the vent. The cord wrap also includes a lower end that is spaced from the sidewall and disposed below the at least one port and an upper end that extends from the panel and engages the sidewall above the vend to limit liquid from entering the recess rom above the vent.

It will be understood by one having ordinary skill in the art that construction of the described invention and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the invention, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes, and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations.

It will be understood that any described processes or steps within described processes may be combined with other disclosed processes or steps to form structures within the scope of the present invention. The exemplary structures and processes disclosed herein are for illustrative purposes and are not to be construed as limiting.

## Claims

1. A cleaning apparatus (10, 100), comprising:
a base (12);
an outer housing (14, 114) including a sidewall (16, 116) operably coupled with the base (12), the sidewall (16, 116) defining an interior (18, 118) of the outer housing (14, 114) and having an outer surface (20);
a recess (22, 122) formed in the outer surface (20) of the sidewall (16, 116), the recess (22, 122) defined at least in part by a recess top wall (24, 124), a recess bottom wall (26, 126), and a recess rear wall (28, 128) extending between the recess top wall (24, 124) and the recess bottom wall (26, 126);
a vent (30, 130) disposed in the recess (22, 122) and defining at least one port (32, 132) in the recess rear wall (28, 128) that provides fluid communication to the interior (18, 118); and
a holder (34, 134) coupled with the sidewall (16, 116),
**characterized in that** the holder (34, 134) has a portion disposed opposite the recess rear wall (28, 128) such that the holder (34, 134) covers a front of the at least one port (32, 132), wherein the holder (34, 134) is configured to secure a component (36, 136) with the outer housing (14, 114).

2. The cleaning apparatus (10, 100) of claim 1, wherein the holder (34, 134) is spaced from and covers an entirety of the front of the at least one port (32, 132).

3. The cleaning apparatus (10, 100) of either one of claims 1 or 2, further comprising:
an ingress (102, 202) defined by the outer surface (20) below the recess (22, 122) and extending at an oblique angle (y) into the recess (22, 122).

4. The cleaning apparatus (10, 100) of claim 3, wherein the at least one port (32, 132) is defined by a peripheral flange (78) having an upper wall (82) and an opposing lower wall (84) extending from the recess rear wall (28, 128).

5. The cleaning apparatus (10, 100) of claim 4, wherein the upper wall (82) extends further from the recess rear wall (28, 128) than the lower wall (84).

6. The cleaning apparatus (10, 100) of claim 5, wherein the upper wall (82) extends at an oblique angle (β) relative to the recess rear wall (28, 128) and includes an edge (98) overhanging the front of the at least one port (32, 132).

7. The cleaning apparatus (10, 100) of either one of claims 5 or 6, wherein the upper wall (82) tapers from the outer surface (20) toward the lower wall (84).

8. The cleaning apparatus (10, 100) of any one of claims 1-7, wherein the holder (34, 134) includes a panel (50, 150) extending across a length (L) of the recess (22, 122) from a first lateral end (52) of the recess (22, 122) to a second lateral end (54) of the recess (22, 122) to cover the front of the at least one port (32, 132).

9. The cleaning apparatus (10, 100) of claim 8, wherein the panel (50, 150) includes a lower end spaced from the sidewall (16, 116), and wherein the lower end is disposed below the at least one port (32, 132).

10. The cleaning apparatus (10, 100) of either one of claims 8 or 9, wherein the holder (34, 134) includes an upper end extending from the panel (50, 150) and engaging the sidewall (16, 116) above the vent (30, 130) to limit liquid from entering the recess (22, 122) from above the vent (30, 130).

11. The cleaning apparatus (10, 100) of any one of claims 1-10, wherein the at least one port (32, 132) is a single unitary port.

12. The cleaning apparatus (10, 100) of any one of claims 1-10, wherein the at least one port (32, 132) includes a plurality of ports, and further includes a guide interposing a pair of the plurality of ports.

13. The cleaning apparatus (10, 100) of any one of claims 1-12, wherein the holder (34, 134) defines a cord wrap (34, 134) configured to secure a power cord (36, 136) for said cleaning apparatus (10, 100) with the outer housing (14, 114).

14. The cleaning apparatus (10, 100) of claim 13, wherein the cord wrap (34, 134) includes first and second tabs (64, 66) that are rotatable to facilitate easy unwinding of the power cord (36, 136).

15. The cleaning apparatus (10, 100) of any one of claims 1-14, further comprising:
a cooling fan (226) disposed in an inner motor housing and configured to draw air through the at least one port (32, 132) and into the interior (18, 118) of said cleaning apparatus (10, 100).

## Patentansprüche

1. Reinigungsgerät (10, 100) mit:
einer Basis (12),
einem äußeren Gehäuse (14, 114) einschließlich einer Seitenwand (16, 116), die funktionsfähig mit der Basis (12) gekoppelt ist, wobei die Seitenwand (16, 116) einen Innenraum (18, 118) des äußeren Gehäuses (14, 114) definiert und eine äußere Oberfläche (20) hat,
einer in der Außenfläche (20) der Seitenwand (16, 116) gebildeten Nische (22, 122), wobei die Nische (22, 122) wenigstens teilweise durch eine Nischenoberwand (24, 124), eine Nischenbodenwand (26, 126) und eine Nischenrückwand (28, 128) definiert ist, die zwischen der Nischenoberwand (24, 124) und der Nischenbodenwand (26, 126) verläuft,
einer Lüftung (30, 130), die sich in der Nische (22, 122) befindet und wenigstens eine Öffnung (32, 132) in der Nischenrückwand (28, 128) definiert, die Fließverbindung zum Innenraum (18, 118) ermöglicht, und
einem mit der Seitenwand (16, 116) verbundenen Halter (34, 134),
**dadurch gekennzeichnet, dass** der Halter (34, 134) einen Teil hat, der gegenüberliegend der Nischenrückwand (28, 128) angeordnet ist, so dass der Halter (34, 134) eine Vorderseite der wenigstens einen Öffnung (32, 132) überdeckt, wobei der Halter (34, 134) dazu ausgestaltet ist, um eine Komponente (36, 136) am äußeren Gehäuse (14, 114) zu befestigen.

2. Reinigungsgerät (10, 100) nach Anspruch 1, wobei der Halter (34, 134) auf Abstand zu der wenigstens einen Öffnung (32, 132) ist und diese insgesamt überdeckt.

3. Reinigungsgerät (10, 100) nach Anspruch 1 oder 2, weiterhin mit:
einem Eingang (102, 202), der durch die Außenwand (20) unter der Nische (22, 122) definiert ist und unter einem schrägen Winkel (γ) in die Nische (22, 122) verläuft.

4. Reinigungsgerät (10, 100) nach Anspruch 3, wobei die wenigstens eine Öffnung (32, 132) durch einen umlaufenden Flansch (78) definiert ist, der eine obere Wand (82) und eine gegenüberliegende untere Wand (84) aufweist, die von der Nischenrückwand (28, 128) vorstehen.

5. Reinigungsgerät (10, 100) nach Anspruch 4, wobei die obere Wand (82) weiter von der Nischenrückwand (28, 128) vorsteht als die untere Wand (84).

6. Reinigungsgerät (10, 100) nach Anspruch 5, wobei die obere Wand (82) in einem schrägen Winkel (β) relativ zur Nischenrückwand (28, 128) verläuft und eine Kante (98) hat, die einen Überhang über die Vorderseite der wenigstens Öffnung (32, 132) bildet.

7. Reinigungsgerät (10, 100) nach einem der Ansprüche 5 oder 6, wobei die obere Wand (82) ausgehend von der äußeren Oberfläche (20) auf die untere Wand (84) zuläuft.

8. Reinigungsgerät (10, 100) nach einem der Ansprüche 1-7, wobei der Halter (34, 134) ein Wandstück (50, 150) umfasst, das über eine Länge (L) der Nische (22, 122) von einem ersten seitlichen Ende (52) der Nische (22, 122) zu einem zweiten seitlichen Ende (54) der Nische (22, 122) verläuft, um die Vorderseite der wenigstens einen Öffnung (32, 132) zu überdecken.

9. Reinigungsgerät (10, 100) nach Anspruch 8, wobei das Wandstück (50, 150) ein unteres Ende umfasst, das auf Abstand zu der Seitenwand (16, 116) ist und wobei das untere Ende sich unterhalb der wenigstens einen Öffnung (32, 132) befindet.

10. Reinigungsgerät (10, 100) nach einem der Ansprüche 8 oder 9, wobei der Halter (34, 134) ein oberes Ende hat, das von dem Wandstück (50, 150) vorsteht und an der Seitenwand (16, 116) oberhalb der Lüftung (30, 130) anliegt, um den Eintritt von Flüssigkeit von oberhalb der Lüftung (30, 130) in die Nische (22, 122) zu begrenzen.

11. Reinigungsgerät (10, 100) nach einem der Ansprüche 1-10, wobei die wenigstens eine Öffnung (32, 132) eine einzelne einheitliche Öffnung ist.

12. Reinigungsgerät (10, 100) nach einem der Ansprüche 1-10, wobei die wenigstens eine Öffnung (32, 132) eine Mehrzahl von Öffnungen umfasst und weiterhin eine Führung aufweist, die zwischen einem Paar aus der Mehrzahl von Öffnungen verläuft.

13. Reinigungsgerät (10, 100) nach einem der Ansprüche 1-12, wobei der Halter (34, 134) eine Kabelaufwicklung (34, 134) definiert, die dazu ausgestaltet ist, um ein Stromkabel (36, 136) für das Reinigungsgerät (10, 100) am äußeren Gehäuse (14, 114) zu fixieren.

14. Reinigungsgerät (10, 100) nach Anspruch 13, wobei die Kabelaufwicklung (34, 134) erste und zweite Fortsätze (64, 66) aufweist, die drehbar sind, um ein einfaches Abwickeln des Stromkabels (36, 136) zu erleichtern.

15. Reinigungsgerät (10, 100) nach einem der Ansprüche 1-14, weiterhin mit:
einem Kühlgebläse (226), das sich in einem inneren Motorgehäuse befindet und das dazu ausgestaltet ist, um Luft durch die wenigstens eine Öffnung (32, 132) und in den Innenraum (18, 118) des Reinigungsgeräts (10, 100) anzusaugen.

## Revendications

1. Appareil de nettoyage (10, 100), comprenant :
une base (12) ;
un boîtier externe (14, 114) comprenant une paroi latérale (16, 116) couplée de manière opérationnelle avec la base (12), la paroi latérale (16, 116) définissant un intérieur (18, 118) du boîtier externe (14, 114) et ayant une surface externe (20) ;
un évidement (22, 122) formé dans la surface externe (20) de la paroi latérale (16, 116), l'évidement (22, 122) étant défini au moins en partie par une paroi supérieure d'évidement (24, 124), une paroi inférieure d'évidement (26, 126), et une paroi arrière d'évidement (28, 128) s'étendant entre la paroi supérieure d'évidement (24, 124) et la paroi inférieure d'évidement (26, 126) ;
un évent (30, 130) disposé dans l'évidement (22, 122) et définissant au moins un orifice (32, 132) dans la paroi arrière d'évidement (28, 128) qui fournit une communication fluidique avec l'intérieur (18, 118) ; et
un support (34, 134) couplé avec la paroi latérale (16, 116),
**caractérisé en ce que** le support (34, 134) présente une partie disposée opposée à la paroi arrière d'évidement (28, 128) de sorte que le support (34, 134) couvre une face avant dudit au moins un orifice (32, 132), dans lequel le support (34, 134) est configuré pour fixer un composant (36, 136) avec le boîtier externe (14, 114).

2. Appareil de nettoyage (10, 100) selon la revendication 1, dans lequel le support (34, 134) est espacé de et couvre une totalité de la face avant dudit au moins un orifice (32, 132).

3. Appareil de nettoyage (10, 100) selon l'une quelconque des revendications 1 ou 2, comprenant en outre :
une entrée (102, 202) définie par la surface externe (20) en dessous de l'évidement (22, 122) et s'étendant selon un angle oblique (γ) dans l'évidement (22, 122).

4. Appareil de nettoyage (10, 100) selon la revendication 3, dans lequel ledit au moins un orifice (32, 132) est défini par une bride périphérique (78) ayant une paroi supérieure (82) et une paroi inférieure opposée (84) s'étendant depuis la paroi arrière d'évidement (28, 128).

5. Appareil de nettoyage (10, 100) selon la revendication 4, dans lequel la paroi supérieure (82) s'étend plus loin depuis la paroi arrière d'évidement (28, 128) que la paroi inférieure (84).

6. Appareil de nettoyage (10, 100) selon la revendication 5, dans lequel la paroi supérieure (82) s'étend selon un angle oblique (β) par rapport à la paroi arrière d'évidement (28, 128) et comprend un bord (98) en saillie sur la face avant dudit au moins un orifice (32, 132).

7. Appareil de nettoyage (10, 100) selon l'une quelconque des revendications 5 ou 6, dans lequel la paroi supérieure (82) s'effile depuis la surface externe (20) vers la paroi inférieure (84).

8. Appareil de nettoyage (10, 100) selon l'une quelconque des revendications 1 à 7, dans lequel le support (34, 134) comprend un panneau (50, 150) s'étendant sur une longueur (L) de l'évidement (22, 122) depuis une première extrémité latérale (52) de l'évidement (22, 122) jusqu'à une seconde extrémité latérale (54) de l'évidement (22, 122) pour couvrir la face avant dudit au moins un orifice (32, 132).

9. Appareil de nettoyage (10, 100) selon la revendication 8, dans lequel le panneau (50, 150) comprend une extrémité inférieure espacée de la paroi latérale (16, 116), et dans lequel l'extrémité inférieure est disposée en dessous dudit au moins un orifice (32, 132).

10. Appareil de nettoyage (10, 100) selon l'une quelconque des revendications 8 ou 9, dans lequel le support (34, 134) comprend une extrémité supérieure s'étendant depuis le panneau (50, 150) et venant en prise avec la paroi latérale (16, 116) au-dessus de l'évent (30, 130) pour limiter l'entrée de liquide dans l'évidement (22, 122) par le dessus de l'évent (30, 130).

11. Appareil de nettoyage (10, 100) selon l'une quelconque des revendications 1 à 10, dans lequel ledit au moins un orifice (32, 132) est un orifice unitaire unique.

12. Appareil de nettoyage (10, 100) selon l'une quelconque des revendications 1 à 10, dans lequel ledit au moins un orifice (32, 132) comprend une pluralité d'orifices, et comprenant en outre un guide disposé entre une paire de la pluralité d'orifices.

13. Appareil de nettoyage (10, 100) selon l'une quelconque des revendications 1 à 12, dans lequel le support (34, 134) définit un enrouleur de cordon (34, 134) configuré pour fixer un cordon d'alimentation (36, 136) dudit appareil de nettoyage (10, 100) avec le boîtier externe (14, 114).

14. Appareil de nettoyage (10, 100) selon la revendication 13, dans lequel l'enrouleur de cordon (34, 134) comprend des première et seconde pattes (64, 66) qui sont rotatives pour faciliter un déroulement du cordon d'alimentation (36, 136).

15. Appareil de nettoyage (10, 100) selon l'une quelconque des revendications 1 à 14, comprenant en outre :
un ventilateur de refroidissement (226) disposé dans un logement de moteur interne et configuré pour aspirer de l'air à travers ledit au moins un orifice (32, 132) et dans l'intérieur (18, 118) dudit appareil de nettoyage (10, 100).
